# EUROPÄISCHE PATENTSCHRIFT

(11) **EP 0 584 554 B1**
(45) Veröffentlichungstag und Bekanntmachung des Hinweises auf die Patenterteilung: **27.12.1996**
(21) Anmeldenummer: 93111957.2
(22) Anmeldetag: 27.07.1993
(51) Int. Cl.: H05K 11/02

(54) **Schaltungsanordnung für die Betriebsspannungsversorgung eines Autoradios**
Circuitry for the supply of operating voltage of a car radio
Circuit pour l'alimentation en tension d'une autoradio

(30) Priorität: 25.08.1992 DE 4228116
(43) Veröffentlichungstag der Anmeldung: 02.03.1994
(73) Patentinhaber: Blaupunkt-Werke GmbH, D-31132 Hildesheim (DE)
(72) Erfinder: Spelter, Michael, D-31139 Hildesheim (DE); Menzel, Thomas, D-31188 Holle (DE)

(56) Entgegenhaltungen:
- EP-A- 0 297 473
- DE-A- 2 910 073
- DE-A- 3 304 103
- DE-A- 3 820 639
- GB-A- 2 115 195

## Beschreibung

Die Erfindung betrifft eine Schaltungsanordnung für die Betriebsspannungsversorgung eines eine erste und eine zweite Anschlußklemme aufweisenden Autoradios nach dem Gattungsbegriff des Anspruchs 1.

Derartige bekannte Schaltungsanordnungen dienen dazu, Funktionsblöcke des Autoradios, die zur Speicherung von Senderdaten und/oder Codierungen für Diebstahlsicherungen dienen, ständig mit der Betriebsspannung zu versorgen, während der Empfangs- und Wiedergabeteil des Autoradios über das Zündschloß des Kraftfahrzeuges abschaltbar ist.

Aus der DE 29 10 073 C2 ist ferner ein Rundfunkempfänger mit Verkehrsfunkdecoder mit Durchsagekennung und einer automatisch gesteuerten Aufzeichnungs- und Wiedergabeeinrichtung bekannt, wobei zur Aufzeichnung der Verkehrsdurchsagen ein digitaler Speicher vorgesehen ist. Um ein Aufzeichnen zu ermöglichen, sind Empfänger, Verkehrsfunkdecoder und Speicher ständig eingeschaltet.

Aus der DE 38 20 639A1 ist eine Energiesparschaltung bekannt, die nur die für die Auswertung für Verkehrsnachrichten benötigten Baugruppen mit der Betriebsspannungsquelle solange verbindet, bis Rundfunksendungen wiedergegeben werden müssen.

Diese bekannte Energiesparschaltung belastet die Batterie auch dann, wenn zwar das Fahrzeug in Betrieb genommen ist, aber weiterhin kein Bedarf an der Wiedergabe von Rundfunksendungen besteht, das Autoradio also ausgeschaltet ist.

Der Erfindung lag die Aufgabe zugrunde, die Energiesparschaltung hinsichtlich der Steuerung der Entnahme von Energie aus der Batterie weiter zu verbessern.

Diese Aufgabe wird erfindungsgemäß durch im kennzeichnenden Teil des Anspruchs 1 angegebenen Maßnahmen gelöst.

Vorteilhafte Ausgestaltungen der Erfindungen sind in den Unteransprüchen angegeben.

Ein Ausführungsbeispiel der Erfindung ist in der Zeichnung dargestellt und wird im folgenden näher erläutert.

Es zeigen:
- Fig. 1: ein Blockschaltbild der Schaltungsanordnung und
- Fig. 2: die Steuerschaltung der Schaltungsanordnung in Verbindung mit den steuerbaren Schaltern.

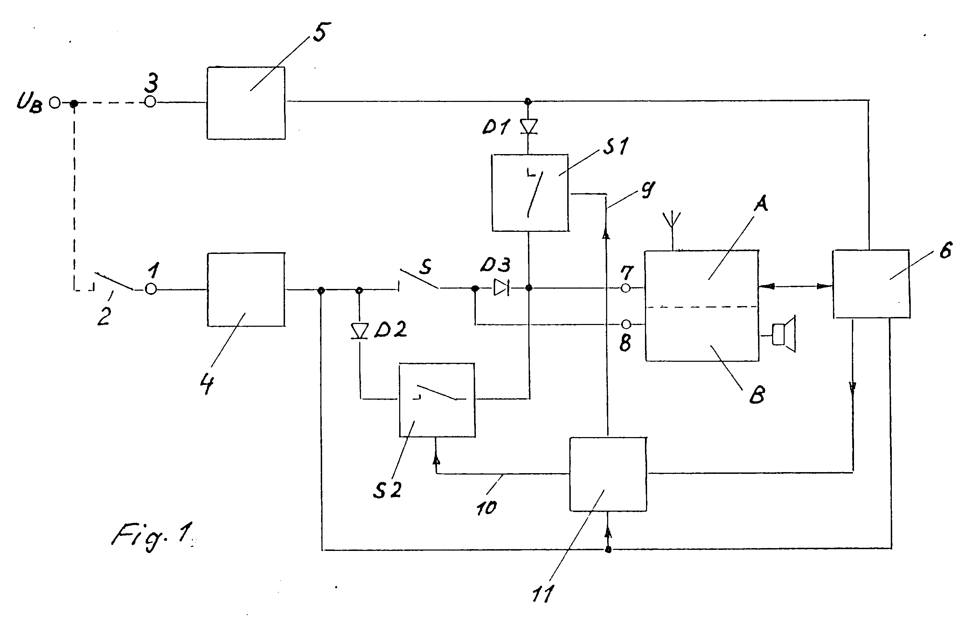

Bei einer Schaltungsanordnung nach Fig. 1 für die Betriebsspannungsversorgung eines eine erste und eine zweite Anschlußklemme aufweisenden, nicht näher dargestellten Autoradios ist die erste Anschlußklemme 1 für die Zuführung einer mittels eines Kraftfahrzeugzündschlosses 2 extern schaltbaren Betriebsspannung U_{B} und die zweite Anschlußklemme 3 für die Zuführung einer ständig anliegenden Betriebsspannung U_{B} vorgesehen. Die erste Anschlußklemme 1 ist über ein Störspannungsimpulse des Bordnetzes unter-drükkendes und für die maximale Stromaufnahme des Autoradios bemessenes Entstörglied 4 mit dem Eingang des internen Autoradio-Ein-/Aus-Schalters S verbunden. Die zweite Anschlußklemme 3 ist über ein für geringe Ströme bemessenes HF-Siebglied 5 mit einem Mikroprozessor 6 verbunden. Der Ausgang des HF-Siebgliedes 5 ist außerdem über eine in Flußrichtung geschaltete Diode D1 und einen ersten steuerbaren Schalter S1 mit der Betriebsspannungsklemme 7 eines Teils A des Autoradios verbunden, welcher Mittel zum Empfang und automatischen Speichern von Verkehrsfunkdurchsagen umfaßt, wobei beliebig abrufbare digitale Speicher vorgesehen sind. Der Ausgang des Entstörgliedes 4 ist über eine in Flußrichtung geschaltete Diode D2 und einen zweiten steuerbaren Schalter S2 ebenfalls mit der Betriebsspannungsklemme 7 des Teils A verbunden. Auch die Ausgangsklemme des Ein-/Aus-Schalters S ist über eine in Flußrichtung geschaltete Diode D3 mit der Betriebsspannungsklemme 7 verbunden. Zudem ist die Ausgangsklemme des Ein-/Aus-Schalters S mit der Betriebsspannungsklemme 8 eines NF- und Endstufen umfassenden Teils B des Autoradios verbunden. Die Steuereingänge der steuerbaren Schalter S1 und S2 sind über Steuerleitungen 9, 10 mit Ausgängen einer Steuerschaltung 11 verbunden. Der Ausgang des Entstörgliedes 4 ist mit einem ersten Eingang der Steuerschaltung 11 und mit einem Eingang des Mikroprozessors 6 verbunden. Ein weiterer Eingang der Steuerschaltung 11 ist mit einem Ausgang des Mikroprozessors 6 verbunden.

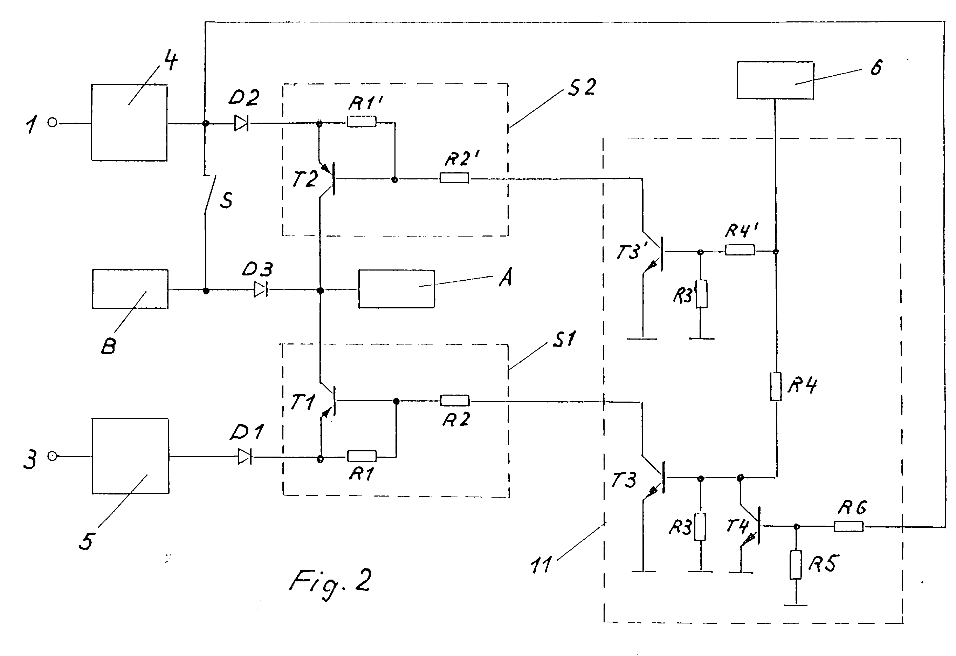

Bei den nach Fig. 2 ausführlich dargestellten steuerbaren Schaltern S1 und S2 sowie der Steuerschaltung 11 ist bei jedem der Schalter S1, S2 der der Diode D1/D2 zugeordnete Eingang mit dem Emitter eines mit seinem Kollektor an der Betriebsspannungsklemme 7 des Teils A liegenden PNP-Transistors T1/T2 verbunden. Die über einen Widerstand R1/R1' mit dem Emitter verbundene Basis ist über einen Widerstand R2/R2' mit dem Steuereingang des jeweiligen Schalters S1 bzw. S2 verbunden. Die beiden mit diesen Steuereingängen verbundenen Ausgänge der Steuerschaltung 11 sind jeweils mit einem Kollektor eines mit seinem Emitter an Masse liegenden NPN-Transistors T3/T3' verbunden. Die jeweils über einen Widerstand R3/R3' an Masse liegende Basis eines jeden Transistors T3/T3' ist über einen Widerstand R4/R4' mit dem dem Mikroprozessor 6 zugeordneten Eingang der Steuerschaltung verbunden. Die Basis des zur Ansteuerung des ersten steuerbaren Schalters S1 vorgesehenen NPN-Transistors T3 ist mit dem Kollektor eines weiteren mit seinem Emitter an Masse liegenden NPN-Transistors T4 verbunden, dessen über einen Widerstand R5 an Masse liegende Basis über einen Widerstand R6 mit dem zur Spannungsabfrage vorgesehenen ersten Eingang der Steuerschaltung 11 verbunden ist.

Beim Betrieb des Autoradios ist der Ein-/Aus-Schalter S geschlossen und das Zündschloß eingeschaltet. Die Betriebsspannung U_{B} wird dem Teil B direkt und dem Teil A über die Diode D3 zugeführt. Bei den anschließend beschriebenen Betriebszuständen ist der Ein-/Aus-Schalter geöffnet, wodurch der die NF- und Endstufen beinhaltende, stromintensive Teil B ohne Betriebsspannungszufuhr ist. Der Mikroprozessor 6 teilt dem Empfänger und der Steuerschaltung 11 über ihren weiteren Eingang mit, daß Verkehrsfunksender empfangen und gespeichert werden sollen. Die Steuerschaltung 11 prüft, ob an ihrem ersten Eingang und damit auch an der ersten Anschlußklemme 1 die Betriebsspannung U_{B} anliegt. Ist dieses nicht der Fall, so schließt die Steuerschaltung 11 den ersten steuerbaren Schalter S1. Damit wird die Betriebsspannung U_{B} über die zweite Anschlußklemme 3, das Siebglied 5, die Diode D1 und den Schalter S1 der Betriebsspannungsklemme 7 zugeführt. Der Teil A ist eingeschaltet, während der Teil B keine Betriebsspannung erhält. Das Autoradio kann somit bei abgezogenem Zündschlüssel Verkehrsdurchsagen empfangen und automatisch speichern. Ist das Zündschloß jedoch eingeschaltet, so gelangt die Betriebsspannung U_{B} über das Entstörglied 4 an den ersten Eingang der Steuerschaltung 11 und veranlaßt diese, den ersten steuerbaren Schalter S1 zu öffnen und den zweiten steuerbaren Schalter S2 zu schließen. Damit wird die Betriebsspannung U_{B} über die erste Anschlußklemme 1, das Entstörglied 4, die Diode D2 und den Schalter S2 der Betriebsspannungsklemme 7 zugeführt. Der Teil A ist angeschaltet, während der Teil B keine Betriebsspannung erhält.

Da dem Teil A des an sich abgeschalteten Autoradios bei eingeschalteter Zündung und ggf. laufendem Motor die Betriebsspannung U_{B} automatisch über das eigentliche Entstörglied 4 des Autoradios zugeführt wird, kann auf ein weiteres aufwendiges Entstörglied verzichtet werden. Es genügt hier ein wenig aufwendiges, preiswertes HF-Siebglied 5.

## Patentansprüche

1. Autoradio mit Empfangsmitteln, einem Decoder für
Verkehrsnachrichten begleitende Signale, bekannt als ARI/RDS-Durchsagekennung, einem Speicher für die Verkehrsnachrichten, einer ersten Anschlußklemme (1) für die Zuführung einer mittels eines Zündschlosses (2) extern schaltbaren Betriebsspannung und einer Steuerschaltung zum Energiesparen, die von der über eine weitere Anschlußklemme (3) ständig anliegenden Betriebsspannung versorgt wird und bei Aktivierung nur einen ersten die Empfangsmittel, den Decoder und den Speicher umfassenden Teil (A) mit Strom versorgt,
gekennzeichnet
durch einen hinter der weiteren Anschlußklemme (3) eingeschleiften ersten Schalter (S1), den die Steuerschaltung zum Energiesparen zur Versorgung des ersten Teiles (A) betätigt, wenn an der ersten Anschlußklemme keine Spannung anliegt,
durch einen hinter der ersten Anschlußklemme (1) eingeschleiften zweiten Schalter (S2), den die Steuerschaltung zum Energiesparen zur Versorgung des ersten Teiles (A) betätigt, wenn an der ersten Anschlußklemme Spannung anliegt und durch Mittel (D1, D2, D3) zur Sperrung der Ausgänge des ersten und zweiten Schalters, wenn mit einem Ein-/Ausschalter (S) das gesamte Autoradio in Betrieb genommen wird.

2. Autoradio nach Anspruch 1,
dadurch gekennzeichnet,
daß zwischen dem Ausgang des Ein-/Ausschalters (S) und der Betriebsspannungsklemme (7) des ersten Teiles (A) eine erste Diode (D3), zwischen dem Eingang des Ein-/Ausschalters (S) und dem Eingang des zweiten Schalters (S2) eine zweite Diode (D2) und zwischen der weiteren Anschlußklemme (3) und dem Eingang des ersten Schalters (S1) eine dritte Diode (D1), jeweils in Flußrichtung gepolt, als Mittel zur Sperrung der Ausgänge des ersten und zweiten Schalters vorgesehen sind, derart, daß der zweite Schalter (S2) hinter der zweiten Diode (D2) und der ersten Anschlußklemme (1) eingeschleift ist.

3. Autoradio nach Anspruch 1 oder 2,
dadurch gekennzeichnet,
daß ein Eingang der Steuerschaltung zum Energiesparen (11) mit der Eingangsklemme des Ein-/Ausschalters (S) und daß die Ausgänge der Steuerschaltung (11) mit den Steuereingängen des ersten und des zweiten Schalters (S1, S2) verbunden sind, und daß die Steuerschaltung (11) einen weiteren Eingang aufweist, über den sie aktivierbar ist.

4. Autoradio nach einem der Ansprüche 1 bis 3,
dadurch gekennzeichnet,
daß im Strompfad zwischen der zweiten Anschlußklemme (3) und dem ersten steuerbaren Schalter (S1) ein HF-Siebglied (5) angeordnet ist.

5. Autoradio nach einem der Ansprüche 1 bis 4,
dadurch gekennzeichnet,
daß die Steuerschaltung (11) von einem Mikroprozessor (6) steuerbar ist.

6. Autoradio nach einem der Ansprüche 1 bis 5,
dadurch gekennzeichnet,
daß die steuerbaren Schalter (S1, S2) je einen PNP-Schalttransistor (T1, T2) aufweisen, dessen Basis über einen Widerstand (R1/R1') mit dem Emitter und über einen weiteren Widerstand (R2/R2') mit dem Steuereingang verbunden ist, daß jeder Ausgang der Steuerschaltung (11) mit dem Kollektor je eines mit seinem Emitter an Masse liegenden NPN-Transistors (T3/T3') verbunden ist, daß die über einen Widerstand (R3/R3') an Masse liegende Basis eines jeden Transistors (T3/T3') über einen Widerstand (R4,R4') mit dem weiteren Eingang der Steuerschaltung (11) verbunden ist und daß die Basis des den ersten Schalter (S1) ansteuernden Transistors (T3) mit dem Kollektor eines weiteren mit seinem Emitter an Masse liegenden NPN-Transistors (T4) verbunden ist, dessen über einen Widerstand (R5) an Masse liegende Basis über einen Widerstand (R6) mit dem ersten Eingang der Steuerschaltung (11) verbunden ist.

## Claims

1. Car radio with reception means, a decoder for signals accompanying traffic messages, known as ARI/RDS traffic announcement identification, a memory for the traffic messages, a first terminal (1) for feeding in an operating voltage which can be switched externally by means of an ignition lock (2), and a control circuit for saving energy, which control circuit is supplied with the operating voltage which is continuously present via a further terminal (3) and, in the case of actuation, supplies power only to a first part (A) which comprises the reception means, the decoder and the memory, characterized
by a first switch (S1) which is connected into a loop downstream of the further terminal (3) and which is activated by the control circuit for saving energy in order to supply the first part (A) when there is no voltage present at the first terminal,
by a second switch (S2) which is connected into a loop downstream of the first terminal (1) and which is activated by the control circuit for saving energy in order to supply the first part (A) when voltage is present at the first terminal, and by means (D1, D2, D3) for disabling the outputs of the first and second switches when the entire car radio is switched on with an on/off switch (S).

2. Car radio according to Claim 1, characterized
in that provided between the output of the on/off switch (S) and the operating voltage terminal (7) of the first part (A) is a first diode (D3), provided between the input of the on/off switch (S) and the input of the second switch (S2) is a second diode (D2) and provided between the further terminal (3) and the input of the first switch (S1) is a third diode (D1), connected in each case with the polarity in the direction of flow, as means for disabling the outputs of the first and second switches, such that the second switch (S2) is connected into a loop downstream of the second diode (D2) and of the first terminal (1).

3. Car radio according to Claim 1 or 2, characterized
in that an output of the control circuit for saving energy (11) is connected to the input terminal of the on/off switch (S), and in that the outputs of the control circuit (11) are connected to the control inputs of the first and second switches (S1, S2), and in that the control circuit (11) has a further input via which it can be actuated.

4. Car radio according to one of Claims 1 to 3, characterized
in that an RF filter (5) is arranged in the current path between the second terminal (3) and the first controllable switch (S1).

5. Car radio according to one of Claims 1 to 4, characterized
in that the control circuit (11) can be controlled by a microprocessor (6).

6. Car radio according to one of Claims 1 to 5, characterized
in that the controllable switches (S1, S2) each have a PNP-type switching transistor (T1, T2) whose base is connected via a resistor (R1/R1') to the emitter and via a further resistor (R2/R2') to the control input, in that each output of the control circuit (11) is connected to the collector in each case of one NPN-type transistor (T3/T3') which is connected to earth by its emitter, in that the base of each transistor (T3/T3') which is connected to earth via a resistor (R3/R3') is connected via a resistor (R4/R4') to the further input of the control circuit (11), and in that the base of the transistor (T3) which drives the first switch (S1) is connected to the collector of a further NPN-type transistor (T4) which is connected to earth by its emitter and whose base which is connected to earth via a resistor (R5) is connected to the first input of the control circuit (11) via a resistor (R6).

## Revendications

1. Autoradio équipé de moyens de réception, d'un décodeur pour les signaux accompagnant les informations de circulation, connues sous la dénomination de messages ARI/RDS, d'une mémoire pour les informations de circulation, d'une première borne (1) pour l'application d'une tension de fonctionnement à commutation externe par l'intermédiaire d'une clé de contact (2), et d'un circuit de commande pour économiser de l'énergie, ce circuit recevant en permanence la tension de fonctionnement appliquée par l'intermédiaire d'une autre borne de branchement (3) et étant alimenté en courant à l'activation seulement d'une première partie (A) comprenant le récepteur, le décodeur et la mémoire,
caractérisé en ce qu'
- un premier interrupteur (S1), à boucle, est prévu derrière l'autre borne de branchement (3), et le circuit de commande est actionné pour économiser l'énergie alimentant la première partie (A), si la première borne de tension ne fournit aucune tension,
- un second interrupteur (S2) est prévu derrière la première borne de branchement (1), ce second interrupteur étant actionné par le circuit de commande pour économiser de l'énergie d'alimentation de la première partie (A), si une tension est appliquée à la première borne de branchement, et
- des moyens (D1, D2, D3) sont prévus pour bloquer les sorties du premier et du second commutateur, si l'interrupteur marche/arrêt (S) a mis en marche l'ensemble de l'autoradio.

2. Autoradio selon la revendication 1,
caractérisé en ce que,
entre la sortie de l'interrupteur marche/arrêt (S) et la borne de tension de fonctionnement (7) de la première partie (A), on a une première diode (D3), entre l'entrée de l'interrupteur marche/arrêt (S) et l'entrée du second commutateur (S2), on a une seconde diode (D2), et entre une autre borne de branchement (3) et l'entrée du premier interrupteur (S1), on a une troisième diode (D1), couplée chaque fois dans le sens passant, ainsi que des moyens pour fermer les sorties des deux premiers interrupteurs, le second commutateur (S2) étant branché en aval de la seconde diode (D2) et de la première borne de branchement (1).

3. Autoradio selon la revendication 1 ou 2,
caractérisé en ce qu'
une entrée du circuit de commande est prévue pour économiser de l'énergie (11) lorsqu'elle est reliée aux bornes d'entrée de l'interrupteur marche/arrêt (S), et en ce que les sorties du circuit de commande (11) sont reliées aux entrées du premier et du second interrupteur (S1, S2), le circuit de commande (11) présentant une autre entrée qui permet d'activer ce circuit.

4. Autoradio selon l'une des revendications 1 à 3,
caractérisé en ce que
dans le chemin du courant entre la seconde borne de branchement (3) et le premier interrupteur commandé (S1), il est prévu un filtre HF (5).

5. Autoradio selon l'une des revendications 1 à 4,
caractérisé en ce que,
le circuit de commande (11) est commandé par un microprocesseur (6).

6. Autoradio selon l'une des revendications 1 à 5,
caractérisé en ce que,
les interrupteurs commandés (S1, S2) comportent chaque fois un transistor PNP (T1, T2) dont la base est reliée par une résistance (R1/R1') à l'émetteur et, par une autre résistance (R2/R2') à l'entrée de commande, chaque sortie du circuit de commande (11) étant reliée au collecteur de chaque transistor NPN (T3/T3') dont l'émetteur est relié à la masse, en ce que par une résistance (R3/R3') mise à la masse, la base de chaque transistor (T3/T3') est reliée par l'intermédiaire d'une résistance (R4/R4') à l'autre entrée du circuit de commande (11), et en ce que la base du transistor (T3) qui commande le premier interrupteur (S1) est reliée au collecteur d'un autre transistor NPN (T4) dont l'émetteur est à la masse et dont la base, mise à la masse par l'intermédiaire d'une résistance (R5), est reliée par une résistance (R6) à la première entrée du circuit de commande (11).
